(19) **Europäisches Patentamt**

**European Patent Office**

**Office européen des brevets**

(11) **EP 0 622 107 B1**

(12) **EUROPEAN PATENT SPECIFICATION**

(45) Date of publication and mention
of the grant of the patent:
**09.02.2000 Bulletin 2000/06**

(51) Int. Cl.$^7$: **B01D 53/92**, B01J 23/40

(21) Application number: **94106560.9**

(22) Date of filing: **27.04.1994**

(54) **Exhaust gas purifying catalyst in diesel engines**

Katalysator zur Reinigung von Abgasen aus Dieselmotoren

Catalyseur pour purifier les gaz d'échappement d'un moteur diesel

(84) Designated Contracting States:
**DE FR GB**

(30) Priority: **28.04.1993 JP 10211893**

(43) Date of publication of application:
**02.11.1994 Bulletin 1994/44**

(73) Proprietors:
- **TOYOTA JIDOSHA KABUSHIKI KAISHA**
  **Aichi-ken (JP)**
- **CATALER INDUSTRIAL CO., LTD.**
  **Ogasa-gun, Shizuoka-ken (JP)**

(72) Inventors:
- **Ogura, Yoshitsugu,**
  **c/o TOYOTA JIDOSHA K.K.**
  **Toyota-shi, Aichi (JP)**
- **Ito, Yukari,**
  **c/o TOYOTA JIDOSHA K.K.**
  **Toyota-shi, Aichi (JP)**
- **Kaneko, Satoshi,**
  **c/o TOYOTA JIDOSHA K.K.**
  **Toyota-shi, Aichi (JP)**
- **Tanaka, Toshiaki,**
  **c/o TOYOTA JIDOSHA K.K.**
  **Toyota-shi, Aichi (JP)**
- **Yamada, Yukimura,**
  **c/o CATALER IND. CO., LTD.**
  **Ogasa-gun, Shizuoka (JP)**
- **Aono, Norihiko,**
  **c/o CATALER IND. CO., LTD.**
  **Ogasa-gun, Shizuoka (JP)**

(74) Representative:
**Tiedtke, Harro, Dipl.-Ing.**
**Patentanwaltsbüro**
**Tiedtke-Bühling-Kinne & Partner**
**Bavariaring 4**
**80336 München (DE)**

(56) References cited:
| | |
|---|---|
| **EP-A- 0 313 434** | **EP-A- 0 462 593** |
| **EP-A- 0 470 653** | **EP-A- 0 494 591** |
| **GB-A- 1 296 874** | **US-A- 4 087 384** |

Remarks:
The file contains technical information submitted after the application was filed and not included in this specification

**Description**

BACKGROUND OF THE INVENTION

Field of the Invention

The present invention relates to an exhaust gas purifying catalyst for burning and purifying HC, CO and Soluble Organic Fraction (SOF) contained in exhaust gases exhausted from diesel engines (DE), and for decreasing emission amount of diesel particulate and sulfate.

Description of the Related Art

Concerning gasoline engines, toxic substances in exhaust gases are clearly decreased since exhaust gases are strictly controlled and techniques are improved. However, concerning DE, since toxic substances are mainly emitted as particulate, control of exhaust gases and development of techniques are not fully achieved. Therefore, it is desirable that the method for firmly purifying exhaust gases are developed.

Conventionally, two methods for purifying exhaust gases in DE have been known. One is the method in which trapping is used (without catalyst or with catalyst). The other is the method in which open-type SOF decomposition catalyst is used. In the former method, diesel particulate is trapped to control emission, and it is effective for exhaust gases having high ratio of dry suits. However, this method requires a regeneration treatment apparatus, so a crack of a catalyst support at the time of regeneration, a block by ash and complication of the system occur.

As disclosed in Japanese Unexamined Patent Publication (KOKAI) No. 38255/1991, open-type SOF decomposition catalyst is the catalyst in which oxidation catalysts such as metals of the platinum group are loaded on the catalyst loaded layer such as activated alumina, so that not only CO and HC but also SOF in diesel particulate is oxidized, decomposed and purified. The open-type SOF decomposition catalyst has the disadvantage that the rejection ratio of dry suits is low. However, it is possible to reduce the amount of dry suits due to improvement of DE and fuel, and the regeneration treatment apparatus is unnecessary. Therefore, it is expected that the open-type SOF decomposition catalyst is further improved.

It is difficult for the open-type SOF decomposition catalyst to reduce the emission amount of diesel particulate. Namely, the activated alumina layer formed in the open-type SOF decomposition catalyst has the characteristics for adsorbing $SO_2$ so that $SO_2$ in exhaust gases in DE is adsorbed into the activated alumina layer. When the temperature of the catalyst becomes high, the adsorbed $SO_2$ is oxidized by catalytic action of catalyst metals, or $SO_2$ in exhaust gases is directly oxidized. As a result, $SO_2$ is emitted as $SO_3$, and the particulate amount is increased. This is why $SO_2$ is not measured as particulate, and $SO_3$ is measured as particulate. Especially, in DE, enough amount of oxygen gas is contained in exhaust gases so that oxidation reaction of $SO_2$ is generated. Then, $SO_3$ easily reacts with much amount of aqueous vapor which are contained in exhaust gases to form sulfate.

EP-A-0 313 434 discloses an exhaust gas purifying catalyst comprising a monolithic support comprising an inert substrate (support base) which is covered by a porous metal oxide material. On the porous support of the catalyst, a first catalytically active phase may be applied on one longitudinal side thereof and a second catalytically active phase may be applied on the other longitudinal side of the catalyst. The first catalytically active phase is a mixture of Pt with e.g. Ce and optionally Zr and the second catalytically active phase is a mixture of Rh with e.g. Ce and optionally Pd and Zr.

SUMMARY OF THE INVENTION

An object of the present invention is to provide an exhaust gas purifying catalyst for preventing particulate and sulfate from being emitted, and for effectively burning and removing HC and SOF.

An exhaust gas purifying catalyst in DE according to the first aspect comprising a support base, a catalyst loaded layer which is formed on the surface of the support base, and a catalyst metal which is loaded on the catalyst loaded layer is defined by the features of claim 1.

Platinum catalyst shows excellent low temperature activity and excellent purification performance at the time of start of low velocity moving. However, in the existence of the platinum catalyst, oxidation of $SO_2$ is generated at low temperature, and sulfate is actively generated at the temperature of not less than 300°C. On the contrary, palladium catalyst shows poor purification performance at low temperature, but shows excellent purification performance at high temperature. $SO_2$ is oxidized by palladium catalyst at the temperature of not less than 450°C. When $SO_2$ is oxidized by platinum catalyst, the temperature is lower than the above temperature.

In the present invention, platinum catalyst is loaded on the upstream side, and palladium catalyst is loaded on the lower stream side. Therefore, when the temperature of exhaust gases is not more than 300°C, platinum catalyst at the upstream side purifies HC and SOF, and no oxidation of $SO_2$ is generated.

The lower stream side of the support base has higher temperature than that of the upstream side of the support base due to reaction heat of catalytic reaction. When platinum catalyst is also loaded on the lower stream side, oxidation of $SO_2$ is generated, and sulfate is generated at early stages. However, in the present invention, since palladium catalyst instead of platinum catalyst is loaded on the lower stream side, sulfate is not generated until the temperature rises to not less than 450°C. Therefore, sulfate is prevented from being emitted at low temperature.

The ratio of the volume of platinum loaded portion at the upstream side to the volume of palladium loaded portion at the lower stream side is desirably in the range of 1:10 to 5:10. When the ratio of the volume of platinum loaded portion at the upstream side is more than 5, generation amount of sulfate is increased. When the ratio of the volume of platinum loaded portion at the upstream side is less than 1, oxidation activity is deteriorated.

Ceramic monolith support, ceramic foam support or metal honeycomb support is used as a support base.

Alumina, silica or titania is used as a catalyst loaded layer. Silica or titania is especially used as the catalyst loaded layer at the lower stream side on which palladium catalyst is loaded. Since silica or titania doesn't adsorb $SO_2$, sulfate is prevented from generating. Silica or titania prevents catalyst metals from poisoning deterioration since silica or titania doesn't have disadvantages that palladium catalyst is covered and activity is deteriorated.

It is preferable that palladium catalyst is loaded on the mixed catalyst loaded layer comprising silica and alumina. As a result, oxidation activity is less deteriorated. Concerning the mixed catalyst loaded layer, the mixing ratio of silica and alumina is desirably in the range of 9:1 to 1:1 by weight ratio. When the ratio of alumina is more than 1, poisoning deterioration of palladium catalyst caused by adsorption of sulfate is increased. When the ratio of silica is more than 9, oxidation activity is deteriorated. When alumina is loaded on the lower stream side of the catalyst loaded layer, it is desirable that the diameter of particles is in the range of 0.1 to 10μm, preferably 10.5 to 5μm.

Concerning the above catalyst in which each of platinum and palladium is separately loaded, it is supposed that white smoke is emitted from an exhaust pipe at the time of acceleration when the velocity changes from slow to fast. The reason that white smoke is generated is supposed as follows.

Namely, at the time of idling, since the temperature of exhaust gases is low and gas flow velocity is slow, HC and SOF are adsorbed into the activated alumina layer. At the time of acceleration, since the temperature of exhaust gases is high and gas flow velocity is fast, adsorbed HC and SOF are eliminated and oxidized by catalyst metals. Concerning platinum catalyst, HC and SOF are burned at low temperature. On the contrary, concerning palladium catalyst, HC and SOF are emitted from the palladium loaded portion in the incomplete combustion condition to be white smoke when the temperature of palladium catalyst is not enough to be activated.

An exhaust gas purifying catalyst in DE according to the second aspect is defined according to claim 5. HC and SOF in the incomplete combustion condition which are exhausted from palladium loaded portion are burned and oxidized by platinum catalyst which is loaded on the lowest stream side of the exhaust gas flow, thereby preventing white smoke from being emitted.

The loaded amount of platinum catalyst is desirably in the minimum range in which HC and SOF can be burned and removed. In this case, it is not necessary to decrease the loaded amount per unit weight of the support base, and it is desirable that the loaded area is decreased while the loaded amount per unit weight is constant, namely, the loaded portion is limited to the portion ranging from edge surface to 5 to 10% of whole length of the support base. Therefore, HC and SOF are removed while preventing the oxidation of $SO_2$.

In accordance with purposes, various kinds of catalyst metals except platinum and palladium can be used with platinum and palladium.

When the exhaust gas purifying catalyst in the present invention is used, it is contacted to exhaust gases at the upstream edge portion. SOF is likely to be adsorbed to this portion, but HC and SOF are burned and removed by platinum catalyst which is loaded on this portion and which is excellent in low temperature activity, thereby preventing sedimentation of HC and SOF. Therefore, temporary poisoning due to HC and SOF is prevented at the upstream edge portion and catalyst activity is not deteriorated.

Palladium catalyst in which oxidation reaction of $SO_2$ generates at higher temperature than that of platinum catalyst is loaded on the portion leading to the upstream edge portion. So, $SO_2$ is emitted at low temperature without being oxidized, and particulate and sulfate are prevented from being emitted as compared with conventional exhaust gas purifying catalyst.

Palladium catalyst shows small activity against HC and SOF at low temperature, and HC and SOF which are not removed by the catalyst loaded layer at palladium catalyst loaded portion is likely to be adsorbed. So, when exhaust gas having high temperature and high gas flow velocity flows, adsorbed HC and SOF are eliminated to generate white smoke. Therefore, when platinum catalyst is loaded on the lowest stream side which is lower than the palladium catalyst loaded portion, eliminated HC and SOF are burned and removed by the platinum catalyst, thereby preventing them from being emitted. As a result, white smoke is prevented from being generated.

When palladium catalyst is loaded on the mixed catalyst loaded layer comprising silica and alumina, there is a good balance among adsorption of sulfate, oxidation activity of palladium catalyst and adsorption of SOF to exhibit excellent catalytic characteristics.

BRIEF DESCRIPTION OF THE DRAWINGS

A more complete appreciation of the present invention and many of its advantages will be readily obtained as the same becomes better understood by reference to the following detailed description when considered in connection with the accompanying drawings and detailed specification, all of which forms a part of the disclosure:

Figure 1 is a schematic vertical cross-sectional view for showing the whole structure of the exhaust gas purifying catalyst in the First Preferred Embodiment according to the present invention.

Figure 2 is a main enlarged cross-sectional view for showing the exhaust gas purifying catalyst in the First Preferred Embodiment according to the present invention.

Figure 3 is a main enlarged cross-sectional view for showing the exhaust gas purifying catalyst in the Second Preferred Embodiment according to the present invention.

Figure 4 is a graph for showing the relation between the temperature of the catalyst and the amount of white smoke in the Second Preferred Embodiment according to the present invention.

DETAILED DESCRIPTION OF THE PREFERRED EMBODIMENTS

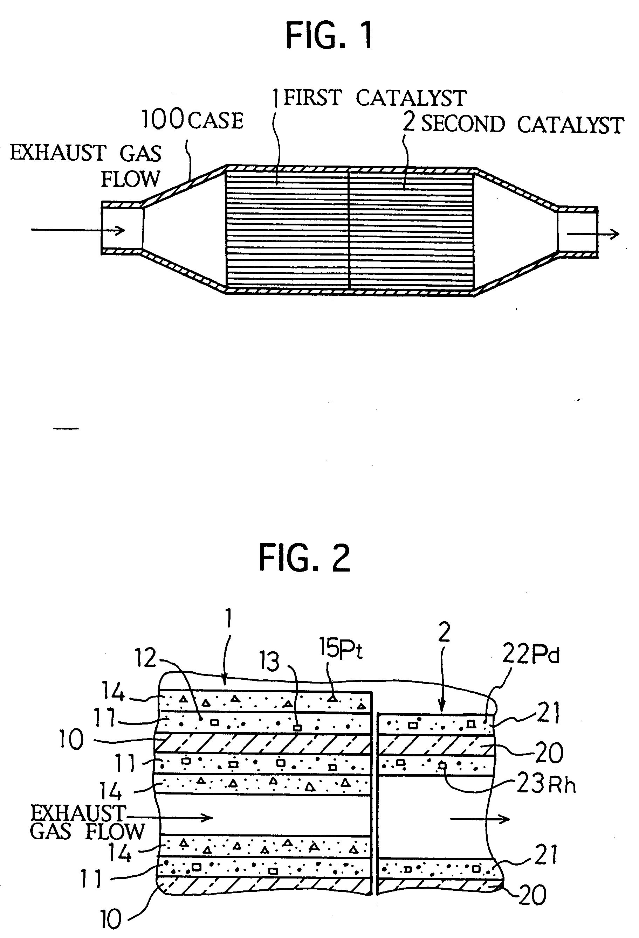

Having generally described the present invention, a further understanding can be obtained by reference to the specific preferred embodiment which is provided herein for purposes of illustration only and is not intended to limit the scope of the appended claims.
The Preferred Embodiments according to the present invention will be hereinafter described with reference to Figures 1 through 4.

First Preferred Embodiment

Example 1

Figures 1 and 2 are schematic vertical cross-sectional views for showing the exhaust gas purifying catalyst for diesel engines according to the present invention. The exhaust gas purifying catalyst comprised a first catalyst 1 and a second catalyst 2. These catalysts were arranged in a case 100 in such a manner that they were parallel and in series with respect to the exhaust gas flow. The first catalyst 1 was arranged at the upstream side, and the second catalyst 2 was arranged at the lower stream side.
The first catalyst 1 which was arranged at the upstream side of the exhaust gas flow comprised a support base 10 comprising honeycomb-shaped support made of ceramic (cordierite), a first catalyst loaded layer 11 comprising titania coated on the surface of the support base 10, palladium catalyst 12 and rhodium catalyst 13 loaded on the first catalyst loaded layer 11, a second catalyst loaded layer 14 comprising alumina ($\alpha$-alumina) coated on the surface of the first catalyst loaded layer 11, platinum catalyst 15 loaded on the second catalyst loaded layer 14.
The second catalyst 2 which was arranged at the downstream side of the exhaust gas flow comprised a support base 20 comprising honeycomb-shaped support made of ceramic (cordierite), a third catalyst loaded layer 21 comprising titania coated on the surface of the support base 20, palladium catalyst 22 and rhodium catalyst 23 loaded on the third catalyst loaded layer 21.
As shown in Table 1, the amount of the second catalyst loaded layer 14 which was loaded on the utmost surface of the first catalyst 1 was 100g/liter. And 1.5g/liter of platinum catalyst 15 was loaded on the second catalyst loaded layer 14.
The amount of the third catalyst loaded layer 21 which was loaded on the utmost surface of the second catalyst 2 was 100g/liter. 1.0g/liter of the palladium catalyst 22 and 0.1g/liter of the rhodium catalyst 23 were loaded on the third catalyst loaded layer 21.
A ratio of the volume of the first catalyst 1 to the volume of the second catalyst 2 was 1:5.
The exhaust gas purifying catalyst for DE in the Example 1 was installed into exhaust system of DE (air volume displacement being 3.6 liters) with natural air intake type accessory cell to perform a purifying test. In the purifying test, the first catalyst 1 was arranged at the upstream side of exhaust gas flow, and the second catalyst 2 was arranged at the downstream side. Then, these catalysts were subjected to aging by full load with the rotating speed of 2100rpm for 100 hours. After that, the catalysts were operated under the condition that the rotating speed was 2100rpm and the torque was 87Nm, and particulates were analyzed at gas temperature of 360°C.

The analysis was performed about the amount of particulates, the SOF amount and the sulfate amount. A dilution tunnel corresponding to EPA was used for trapping particulates. SOF was extracted by Soxhlet extractor by means of dichloromethane. The amount of sulfate was analyzed by ion chromatograph. The result was shown in Table 2.

Example 2

An Example 2 was performed as follows.

The first catalyst 1 which was arranged at the upstream side of the exhaust gas flow comprised a support base 10 comprising honeycomb-shaped support made of ceramic, a first catalyst loaded layer 11 comprising titania coated on the surface of the support base 10, palladium catalyst 12 and rhodium catalyst 13 loaded on the first catalyst loaded layer 11, a second catalyst loaded layer 14 comprising aluminalanthanum coated on the surface of the first catalyst loaded layer 11, platinum catalyst 15 loaded on the second catalyst loaded layer 14.

The second catalyst 2 which was arranged at the downstream side of the exhaust gas flow comprised a support base 20 comprising honeycomb-shaped support made of ceramic, a third catalyst loaded layer 21 comprising silica-titania coated on the surface of the support base 20, palladium catalyst 22 and rhodium catalyst 23 loaded on the third catalyst loaded layer 21.

As shown in Table 1, the amount of the second catalyst loaded layer 14 which was loaded on the utmost surface of the first catalyst 1 was 120g/liter. 1.5g/liter of the platinum catalyst 15 was loaded on the second catalyst loaded layer 14.

The amount of the third catalyst loaded layer 21 which was loaded on the utmost surface of the second catalyst 2 was 120g/liter. 1.0g/liter of the palladium catalyst 22 and 0.1g/liter of the rhodium catalyst 23 were loaded on the third catalyst loaded layer 21.

A ratio of the volume of the first catalyst 1 to the volume of the second catalyst 2 was 1:5.

The purifying test was performed in the same manner as described in the Example 1. The result was shown in Table 2.

Example 3

An Example 3 was performed as follows.

The first catalyst 1 which was arranged at the upstream side of the exhaust gas flow comprised a support base 10 comprising honeycomb-shaped support made of ceramic, a first catalyst loaded layer 11 comprising titania coated on the surface of the support base 10, palladium catalyst 12 and rhodium catalyst 13 loaded on the first catalyst loaded layer 11, a second catalyst loaded layer 14 comprising alumina-ceria coated on the surface of the first catalyst loaded layer 11, platinum catalyst 15 loaded on the second catalyst loaded layer 14.

The second catalyst 2 which was arranged at the downstream side of the exhaust gas flow comprised a support base 20 comprising honeycomb-shaped support made of ceramic, a third catalyst loaded layer 21 comprising silica-alumina coated on the surface of the support base 20, palladium catalyst 22 and rhodium catalyst 23 loaded on the third catalyst loaded layer 21.

As shown in Table 1, the amount of the second catalyst loaded layer 14 which was loaded on the utmost surface of the first catalyst 1 was 100g/liter. 1.2g/liter of the platinum catalyst 15 was loaded on the second catalyst loaded layer 14.

The amount of the third catalyst loaded layer 21 which was loaded on the utmost surface of the second catalyst 2 was 100g/liter. 1.0g/liter of the palladium catalyst 22 and 0.1g/liter of the rhodium catalyst 23 were loaded on the third catalyst loaded layer 21.

A ratio of the volume of the first catalyst 1 to the volume of the second catalyst 2 was 1:10.

The purifying test was performed in the same manner as described in the Example 1. The result was shown in Table 2.

Reference Example 4

A Reference Example 4 was performed as follows.

The first catalyst 1 which was arranged at the upstream side of the exhaust gas flow comprised a support base 10 comprising honeycomb-shaped support made of metal, a first catalyst loaded layer 11 comprising titania coated on the surface of the support base 10, palladium catalyst 12 and rhodium catalyst 13 loaded on the first catalyst loaded layer 11, a second catalyst loaded layer 14 comprising alumina coated on the surface of the first catalyst loaded layer 11, platinum catalyst 15 loaded on the second catalyst loaded layer 14.

The second catalyst 2 which was arranged at the downstream side of the exhaust gas flow comprised a support base 20 comprising honeycomb-shaped support made of metal, a third catalyst loaded layer 21 comprising alumina coated on the surface of the support base 20, palladium catalyst 22 and rhodium catalyst 23 loaded on the third catalyst loaded layer 21.

As shown in Table 1, the amount of the second catalyst loaded layer 14 which was loaded on the utmost surface of the first catalyst 1 was 100g/liter. 1.2g/liter of the platinum catalyst 15 was loaded on the second catalyst loaded layer 14.

The amount of the third catalyst loaded layer 21 which was loaded on the utmost surface of the second catalyst 2 was 100g/liter. 1.0g/liter of the palladium catalyst 22 and 0.1g/liter of the rhodium catalyst 23 were loaded on the third catalyst loaded layer 21.

A ratio of the volume of the first catalyst 1 to the volume of the second catalyst 2 was 1:10.

The purifying test was performed in the same manner as described in the Example 1. The result was shown in Table 2.

Example 5

An Example 5 was performed as follows.

The first catalyst 1 which was arranged at the upstream side of the exhaust gas flow comprised a support base 10 comprising honeycomb-shaped support made of ceramic, a first catalyst loaded layer 11 comprising titania coated on the surface of the support base 10, palladium catalyst 12 and rhodium catalyst 13 loaded on the first catalyst loaded layer 11, a second catalyst loaded layer 14 comprising alumina coated on the surface of the first catalyst loaded layer 11, platinum catalyst 15 and rhodium catalyst loaded on the second catalyst loaded layer 14.

The second catalyst 2 which was arranged at the downstream side of the exhaust gas flow comprised a support base 20 comprising honeycomb-shaped support made of ceramic, a third catalyst loaded layer 21 comprising alumina-ceria coated on the surface of the support base 20, palladium catalyst 22 and rhodium catalyst 23 loaded on the third catalyst loaded layer 21.

As shown in Table 1, the amount of the second catalyst loaded layer 14 which was loaded on the utmost surface of the first catalyst 1 was 100g/liter. 1.2g/liter of the platinum catalyst 15 and 0.2g/liter of the rhodium catalyst were loaded on the second catalyst loaded layer 14.

The amount of the third catalyst loaded layer 21 which was loaded on the utmost surface of the second catalyst 2 was 100g/liter. 1.2g/liter of the palladium catalyst 22 and 0.2g/liter of the rhodium catalyst 23 were loaded on the third catalyst loaded layer 21.

A ratio of the volume of the first catalyst 1 to the volume of the second catalyst 2 was 3:10.

The purifying test was performed in the same manner as described in the Example 1. The result was shown in Table 2.

Reference Example 6

A Reference Example 6 was performed as follows.

The first catalyst 1 which was arranged at the upstream side of the exhaust gas flow comprised a support base 10 comprising honeycomb-shaped support made of ceramic, a first catalyst loaded layer 11 comprising titania coated on the surface of the support base 10, palladium catalyst 12 and rhodium catalyst 13 loaded on the first catalyst loaded layer 11, a second catalyst loaded layer 14 comprising titania coated on the surface of the first catalyst loaded layer 11, platinum catalyst 15 and rhodium catalyst loaded on the second catalyst loaded layer 14.

The second catalyst 2 which was arranged at the downstream side of the exhaust gas flow comprised a support base 20 comprising honeycomb-shaped support made of ceramic, a third catalyst loaded layer 21 comprising alumina coated on the surface of the support base 20, palladium catalyst 22 and rhodium catalyst 23 loaded on the third catalyst loaded layer 21.

As shown in Table 1, the amount of the second catalyst loaded layer 14 which was loaded on the utmost surface of the first catalyst 1 was 100g/liter. 1.2g/liter of the platinum catalyst 15 and 0.2g/liter of the rhodium catalyst were loaded on the second catalyst loaded layer 14.

The amount of the third catalyst loaded layer 21 which was loaded on the utmost surface of the second catalyst 2 was 100g/liter. 1.2g/liter of the palladium catalyst 22 and 0.2g/liter of the rhodium catalyst 23 were loaded on the third catalyst loaded layer 21.

A ratio of the volume of the first catalyst 1 to the volume of the second catalyst 2 was 3:10.

The purifying test was performed in the same manner as described in the Example 1. The result was shown in Table 2.

Example 7

An Example 7 was performed as follows.

The first catalyst 1 which was arranged at the upstream side of the exhaust gas flow comprised a support base 10 comprising honeycomb-shaped support made of ceramic, a first catalyst loaded layer 11 comprising titania coated on the surface of the support base 10, palladium catalyst 12 and rhodium catalyst 13 loaded on the first catalyst loaded layer 11, a second catalyst loaded layer 14 comprising silica coated on the surface of the first catalyst loaded layer 11, platinum catalyst 15 and rhodium catalyst loaded on the second catalyst loaded layer 14.

The second catalyst 2 which was arranged at the downstream side of the exhaust gas flow comprised a support base 20 comprising honeycomb-shaped support made of ceramic, a third catalyst loaded layer 21 comprising silica coated on the surface of the support base 20, palladium catalyst 22 and rhodium catalyst 23 loaded on the third catalyst loaded layer 21.

As shown in Table 1, the amount of the second catalyst loaded layer 14 which was loaded on the utmost surface of the first catalyst 1 was 100g/liter. 1.2g/liter of the platinum catalyst 15 and 0.2g/liter of the rhodium catalyst were loaded on the second catalyst loaded layer 14.

The amount of the third catalyst loaded layer 21 which was loaded on the utmost surface of the second catalyst 2 was 100g/liter. 1.2g/liter of the palladium catalyst 22 and 0.2g/liter of the rhodium catalyst 23 were loaded on the third catalyst loaded layer 21.

A ratio of the volume of the first catalyst 1 to the volume of the second catalyst 2 was 1:5.

The purifying test was performed in the same manner as described in the Example 1. The result was shown in Table 2.

Example 8

An Example 8 was performed as follows.

The first catalyst 1 which was arranged at the upstream side of the exhaust gas flow comprised a support base 10 comprising honeycomb-shaped support made of ceramic, a first catalyst loaded layer 11 comprising titania coated on the surface of the support base 10, palladium catalyst 12 and rhodium catalyst 13 loaded on the first catalyst loaded layer 11, a second catalyst loaded layer 14 comprising alumina coated on the surface of the first catalyst loaded layer 11, platinum catalyst 15 loaded on the second catalyst loaded layer 14.

The second catalyst 2 which was arranged at the downstream side of the exhaust gas flow comprised a support base 20 comprising honeycomb-shaped support made of ceramic, a third catalyst loaded layer 21 comprising silica-titania coated on the surface of the support base 20, palladium catalyst 22 loaded on the third catalyst loaded layer 21.

As shown in Table 1, the amount of the second catalyst loaded layer 14 which was loaded on the utmost surface of the first catalyst 1 was 100g/liter. 1.2g/liter of the platinum catalyst 15 was loaded on the second catalyst loaded layer 14.

The amount of the third catalyst loaded layer 21 which was loaded on the utmost surface of the second catalyst 2 was 100g/liter. 1.0g/liter of the palladium catalyst 22 was loaded on the third catalyst loaded layer 21.

A ratio of the volume of the first catalyst 1 to the volume of the second catalyst 2 was 1:5.

The purifying test was performed in the same manner as described in the Example 1. The result was shown in Table 2.

Reference Example 9

A Reference Example 9 was performed as follows.

The first catalyst 1 which was arranged at the upstream side of the exhaust gas flow comprised a support base 10 comprising honeycomb-shaped support made of ceramic, a first catalyst loaded layer 11 comprising titania coated on the surface of the support base 10, palladium catalyst 12 and rhodium catalyst 13 loaded on the first catalyst loaded layer 11, a second catalyst loaded layer 14 comprising alumina coated on the surface of the first catalyst loaded layer 11, platinum catalyst 15 loaded on the second catalyst loaded layer 14.

The second catalyst 2 which was arranged at the downstream side of the exhaust gas flow comprised a support base 20 comprising honeycomb-shaped support made of ceramic, a third catalyst loaded layer 21 comprising alumina coated on the surface of the support base 20, palladium catalyst 22 loaded on the third catalyst loaded layer 21.

As shown in Table 1, the amount of the second catalyst loaded layer 14 which was loaded on the utmost surface of the first catalyst 1 was 100g/liter. 1.2g/liter of the platinum catalyst 15 was loaded on the second catalyst loaded layer 14.

The amount of the third catalyst loaded layer 21 which was loaded on the utmost surface of the second catalyst 2 was 100g/liter. 1.0g/liter of the palladium catalyst 22 was loaded on the third catalyst loaded layer 21.

A ratio of the volume of the first catalyst 1 to the volume of the second catalyst 2 was 1:5.

The purifying test was performed in the same manner as described in the Example 1. The result was shown in Table 2.

Comparative Example 1

A Comparative Example 1 was performed as follows.

The first catalyst 1 which was arranged at the upstream side of the exhaust gas flow comprised a support base 10 comprising honeycomb-shaped support made of ceramic, a first catalyst loaded layer 11 comprising titania coated on the surface of the support base 10, palladium catalyst 12 and rhodium catalyst 13 loaded on the first catalyst loaded layer 11, a second catalyst loaded layer 14 comprising alumina coated on the surface of the first catalyst loaded layer 11, platinum catalyst 15 loaded on the second catalyst loaded layer 14.

The second catalyst 2 which was arranged at the downstream side of the exhaust gas flow comprised a support base 20 comprising honeycomb-shaped support made of ceramic, a third catalyst loaded layer 21 comprising alumina coated on the surface of the support base 20, platinum catalyst loaded on the third catalyst loaded layer 21.

As shown in Table 1, the amount of the second catalyst loaded layer 14 which was loaded on the utmost surface of the first catalyst 1 was 100g/liter. 1.5g/liter of the platinum catalyst 15 was loaded on the second catalyst loaded layer 14.

The amount of the third catalyst loaded layer 21 which was loaded on the utmost surface of the second catalyst 2 was 100g/liter. 1.5g/liter of the platinum catalyst was loaded on the third catalyst loaded layer 21.

The purifying test was performed in the same manner as described in the Example 1. The result was shown in Table 2.

Comparative Example 2

A Comparative Example 2 was performed as follows.

The first catalyst 1 which was arranged at the upstream side of the exhaust gas flow comprised a support base 10 comprising honeycomb-shaped support made of ceramic, a first catalyst loaded layer 11 comprising titania coated on the surface of the support base 10, palladium catalyst 12 and rhodium catalyst 13 loaded on the first catalyst loaded layer 11, a second catalyst loaded layer 14 comprising alumina coated on the surface of the first catalyst loaded layer 11, palladium catalyst loaded on the second catalyst loaded layer 14.

The second catalyst 2 which was arranged at the downstream side of the exhaust gas flow comprised a support base 20 comprising honeycomb-shaped support made of ceramic, a third catalyst loaded layer 21 comprising alumina coated on the surface of the support base 20, palladium catalyst 22 loaded on the third catalyst loaded layer 21.

As shown in Table 1, the amount of the second catalyst loaded layer 14 which was loaded on the utmost surface of the first catalyst 1 was 100g/liter. 1.5g/liter of the palladium catalyst was loaded on the second catalyst loaded layer 14.

The amount of the third catalyst loaded layer 21 which was loaded on the utmost surface of the second catalyst 2 was 100g/liter. 1.5g/liter of the palladium catalyst 22 was loaded on the third catalyst loaded layer 21.

The purifying test was performed in the same manner as described in the Example 1. The result was shown in Table 2.

Comparative Example 3

A Comparative Example 3 was performed as follows.

The first catalyst 1 which was arranged at the upstream side of the exhaust gas flow comprised a support base 10 comprising honeycomb-shaped support made of metal, a first catalyst loaded layer 11 comprising titania coated on the surface of the support base 10, palladium catalyst 12 and rhodium catalyst 13 loaded on the first catalyst loaded layer 11, a second catalyst loaded layer 14 comprising alumina coated on the surface of the first catalyst loaded layer 11, platinum catalyst 15 and rhodium catalyst loaded on the second catalyst loaded layer 14.

The second catalyst 2 which was arranged at the downstream side of the exhaust gas flow comprised a support base 20 comprising honeycomb-shaped support made of metal, a third catalyst loaded layer 21 comprising alumina coated on the surface of the support base 20, platinum catalyst and rhodium catalyst 23 loaded on the third catalyst loaded layer 21.

As shown in Table 1, the amount of the second catalyst loaded layer 14 which was loaded on the utmost surface of the first catalyst 1 was 100g/liter. 1.2g/liter of the platinum catalyst 15 and 0.2g/liter of the rhodium catalyst were loaded on the second catalyst loaded layer 14.

The amount of the third catalyst loaded layer 21 which was loaded on the utmost surface of the second catalyst 2 was 100g/liter. 1.2g/liter of the platinum catalyst and 0.2g/liter of the rhodium catalyst 23 were loaded on the third catalyst loaded layer 21.

The purifying test was performed in the same manner as described in the Example 1. The result was shown in Table 2.

Comparative Example 4

A Comparative Example 4 was performed as follows.

The first catalyst 1 which was arranged at the upstream side of the exhaust gas flow comprised a support base 10 comprising honeycomb-shaped support made of ceramic, a first catalyst loaded layer 11 comprising titania coated on the surface of the support base 10, palladium catalyst 12 and rhodium catalyst 13 loaded on the first catalyst loaded layer 11, a second catalyst loaded layer 14 comprising alumina coated on the surface of the first catalyst loaded layer 11, palladium catalyst and rhodium catalyst loaded on the second catalyst loaded layer 14.

The second catalyst 2 which was arranged at the downstream side of the exhaust gas flow comprised a support base 20 comprising honeycomb-shaped support made of ceramic, a third catalyst loaded layer 21 comprising alumina coated on the surface of the support base 20, palladium catalyst 22 and rhodium catalyst 23 loaded on the third catalyst loaded layer 21.

As shown in Table 1, the amount of the second catalyst loaded layer 14 which was loaded on the utmost surface of the first catalyst 1 was 100g/liter. 1.2g/liter of the palladium catalyst and 0.2g/liter of the rhodium catalyst were loaded on the second catalyst loaded layer 14.

The amount of the third catalyst loaded layer 21 which was loaded on the utmost surface of the second catalyst 2 was 100g/liter. 1.2g/liter of the palladium catalyst 22 and 0.2g/liter of the rhodium catalyst 23 were loaded on the third catalyst loaded layer 21.

The purifying test was performed in the same manner as described in the Example 1. The result was shown in Table 2.

Comparative Example 5

A Comparative Example 5 was performed as follows.

The first catalyst 1 which was arranged at the upstream side of the exhaust gas flow comprised a support base 10 comprising honeycomb-shaped support made of ceramic, a first catalyst loaded layer 11 comprising titania coated on the surface of the support base 10, palladium catalyst 12 and rhodium catalyst 13 loaded on the first catalyst loaded layer 11, a second catalyst loaded layer 14 comprising alumina coated on the surface of the first catalyst loaded layer 11, platinum catalyst 15 and palladium catalyst loaded on the second catalyst loaded layer 14.

The second catalyst 2 which was arranged at the downstream side of the exhaust gas flow comprised a support base 20 comprising honeycomb-shaped support made of ceramic, a third catalyst loaded layer 21 comprising alumina coated on the surface of the support base 20, platinum catalyst and palladium catalyst 22 loaded on the third catalyst loaded layer 21.

As shown in Table 1, the amount of the second catalyst loaded layer 14 which was loaded on the utmost surface of the first catalyst 1 was 100g/liter. 1.0g/liter of the platinum catalyst 15 and 1.0g/liter of the palladium catalyst were loaded on the second catalyst loaded layer 14.

The amount of the third catalyst loaded layer 21 which was loaded on the utmost surface of the second catalyst 2 was 100g/liter. 1.0g/liter of the platinum catalyst and 1.0g/liter of the palladium catalyst 22 were loaded on the third catalyst loaded layer 21.

The purifying test was performed in the same manner as described in the Example 1. The result was shown in Table 2.

TABLE 1

| | | Material of Support Base Material | First Catalyst (Upstream Portion) | | | | Second Catalyst (Downstream Portion) | | | | Volume First Catalyst/ Second Catalyst |
|---|---|---|---|---|---|---|---|---|---|---|---|
| | | | Second Catalyst Loaded Layer | Coated Amount | Catalyst Metal | Loaded Amount | Third Catalyst Loaded Layer | Coated Amount | Catalyst Metal | Loaded Amount | |
| Examples | 1 | Ceramic | Alumina | 100 g/l | Pt | 1.5 g/l | Titania | 100 g/l | Pd/Rh | 1/0.1g/l | 1/5 |
| | 2 | Ceramic | Alumina-lanthanum | 120 g/l | Pt | 1.5 | Silica-Titania | 120 g/l | Pd/Rh | 1/0.1 | 1/5 |
| | 3 | Ceramic | Alumina-Ceria | 100 g/l | Pt | 1.2 | Silica-Alumina | 100 g/l | Pd/Rh | 1/0.1 | 1/10 |
| | 4 (Ref.) | Metal | Alumina | 100 g/l | Pt | 1.2 | Alumina | 100 g/l | Pd/Rh | 1/0.1 | 1/10 |
| | 5 | Ceramic | Alumina | 100 g/l | Pt/Rh | 1.2/0.2 | Alumina-Ceria | 100 g/l | Pd/Rh | 1.2/0.2 | 3/10 |
| | 6 (Ref.) | Ceramic | Titania | 100 g/l | Pt/Rh | 1.2/0.2 | Alumina | 100 g/l | Pd/Rh | 1.2/0.2 | 3/10 |
| | 7 | Ceramic | Silica | 100 g/l | Pt/Rh | 1.2/0/2 | Silica | 100 g/l | Pd/Rh | 1.2/0.2 | 1/5 |
| | 8 | Ceramic | Alumina | 100 g/l | Pt | 1.2 | Silica-Titania | 100 g/l | Pd | 1 | 1/5 |
| | 9 (Ref.) | Ceramic | Alumina | 100 g/l | Pt | 1.2 | Alumina | 100 g/l | Pd | 1 | 1/5 |
| Comparative Examples | 1 | Ceramic | Alumina | 100 g/l | Pt | 1.5 | Alumina | 100 g/l | Pt | 1.5 | — |
| | 2 | Ceramic | Alumina | 100 g/l | Pd | 1.5 | Alumina | 100 g/l | Pd | 1.5 | — |
| | 3 | Metal | Alumina | 100 g/l | Pt/Rh | 1.2/0.2 | Alumina | 100 g/l | Pt/Rh | 1.2/0.2 | — |
| | 4 | Ceramic | Alumina | 100 g/l | Pd/Rh | 1.2/0.2 | Alumina | 100 g/l | Pd/Rh | 1.2/0.2 | — |
| | 5 | Ceramic | Alumina | 100 g/l | Pt/Pd | 1/1 | Alumina | 100 g/l | Pt/Pd | 1/1 | — |

TABLE 2

| | | Amount of Particulate | | | Amount of SOF | | | Amount of Sulfate | |
|---|---|---|---|---|---|---|---|---|---|
| | | Inlet Gas (g/h) | Outlet Gas (g/h) | Purification Ratio (%) | Inlet Gas (g/h) | Outlet Gas (g/h) | Purification Ratio (%) | Inlet Gas (g/h) | Outlet Gas (g/h) |
| Examples | 1 | 9.8 | 7.0 | 29 | 5.4 | 0.6 | 89 | 0.9 | 1.1 |
| | 2 | 10.0 | 7.4 | 26 | 5.6 | 1.2 | 79 | 0.9 | 1.1 |
| | 3 | 10.1 | 6.9 | 32 | 5.5 | 0.9 | 84 | 0.8 | 1.0 |
| | 4 (Ref.) | 9.9 | 6.8 | 31 | 5.4 | 1.1 | 80 | 0.8 | 1.0 |
| | 5 | 9.9 | 7.0 | 29 | 5.3 | 0.8 | 85 | 1.0 | 0.9 |
| | 6 (Ref.) | 10.5 | 6.9 | 34 | 6.0 | 1.0 | 83 | 1.0 | 1.0 |
| | 7 | 10.7 | 7.3 | 32 | 6.2 | 1.2 | 81 | 0.9 | 1.0 |
| | 8 | 9.7 | 6.8 | 30 | 5.5 | 0.8 | 85 | 1.0 | 1.1 |
| | 9 (Ref.) | 9.8 | 7.2 | 27 | 5.5 | 1.0 | 82 | 1.0 | 1.2 |
| Comparative Examples | 1 | 10.2 | 29.1 | -185 | 5.8 | 1.0 | 83 | 0.8 | 12 |
| | 2 | 10.0 | 8.9 | 11 | 5.7 | 2.0 | 65 | 1.0 | 1.3 |
| | 3 | 10.4 | 19.7 | -89 | 5.7 | 1.0 | 82 | 1.0 | 7.1 |
| | 4 | 9.9 | 9.5 | 4 | 5.9 | 3.1 | 47 | 0.9 | 1.2 |
| | 5 | 9.8 | 37.7 | -284 | 5.9 | 1.8 | 69 | 0.9 | 16 |

As seen from Table 2, concerning catalysts in the Comparative Examples, the amount of particulates is increased, the purification performance of SOF is insufficient and the amount of sulfate is enough. Concerning the Comparative Examples 2 and 4 in which the palladium catalyst is loaded on the first catalyst, the amount of particulates and the amount of sulfate are decreased, but the purification performance of SOF is insufficient.

Concerning catalyst in each Example, the purification performance of particulates and the purification performance of SOF are excellent and the amount of sulfate is not enough. This is because platinum is loaded on the first catalyst and palladium is loaded on the second catalyst. The loaded amount and the ratio of the volume have no influence on the above matter.

In the First Preferred Embodiment, two catalysts are used in parallel, but the present invention cannot be limited to this type. When platinum is loaded on the upstream side in the honeycomb body and palladium is loaded on the downstream side in the honeycomb body, the same effect as above is obtained. In the Example 1, the first catalyst loaded layer 11 and the second catalyst loaded layer 14 are formed on the first catalyst 1. When only the second catalyst loaded layer 14 on which the platinum catalyst is loaded is used, the same effect as above is obtained.

Second Preferred Embodiment

Example 10

An Example 10 was performed as follows.

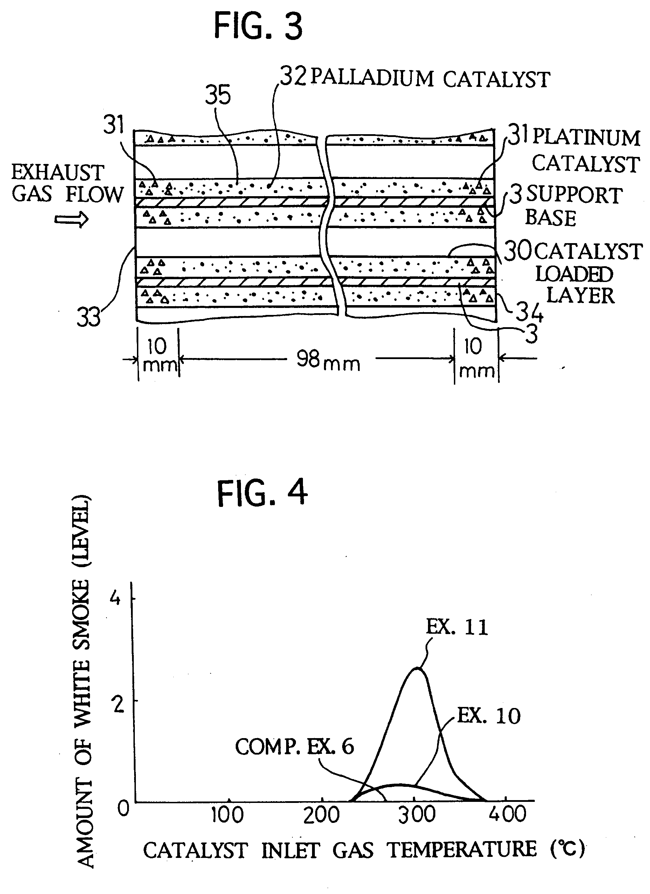

As shown in Figure 3, the catalyst comprises a support base 3 comprising a metal support, a catalyst loaded layer 30 made of $\alpha$-alumina which is covered with the surface of the support base 3, a platinum catalyst 31 and a palladium catalyst 32 which are loaded on the catalyst loaded layer 30. The support base 3 comprises a metal support having the diameter of 112mm and the length of 118mm forming a plane plate and a corrugated plate having the thickness of 50$\mu$m made of Fe-Cr-Al alloy.

150g/liter of $\alpha$-alumina was coated on the surface of the support base 3 to form the catalyst loaded layer 30.

1.5g/liter of the platinum catalyst 31 was loaded on the upstream side of the support base 3 within 10mm from an upstream side edge surface 33 to a downward direction. Furthermore, 1.5g/liter of the platinum catalyst 31 was also loaded on the downstream side of the support base 3 within 10mm from a downstream side edge surface 34 to an upward direction.

1.8g/liter of the palladium catalyst 32 was loaded on a middle portion 35 having the length of 98mm.

Example 11

An Example 11 employed the same compositions and the same manner as described in the Example 10 except that 1.5g/liter of the platinum catalyst 31 was loaded on the upstream side of the support base 3 within 10mm from an upstream side edge surface 33 to a downward direction, and that 1.8g/liter of the palladium catalyst 32 was loaded on a rest portion having the length of 108mm.

Comparative Example 6

A Comparative Example 6 employed the same compositions and the same manner as described in the Example 10 except that 1.5g/liter of the platinum catalyst 31 was loaded on the whole portion of the support base 3.
Concerning the Examples 10, 11 and the Comparative Example 6, each catalyst was installed into an exhaust system of a swirl chamber type DE having air volume displacement of 2400cc. A conversion ratio of $SO_2$ to $SO_3$ was measured by a nondispersive infrared analyzer under the condition that an exhaust gas temperature was 500°C to be represented by the following formula. The result was shown in Table 3.

$$SO_3 \text{ conversion ratio} = (\text{inlet gas } SO_2 \text{ density} - \text{outlet gas } SO_3 \text{ density}) \times 100/\text{inlet gas } SO_2 \text{ density}$$

TABLE 3

|  | Example 10 | Example 11 | Comparative Example 6 |
|---|---|---|---|
| Upstream Side Edge Portion | Pt | Pt | Pt |
| Central Portion | Pd | Pd | Pt |
| Downstream Side Edge Portion | Pt | Pd | Pt |
| Conversion Ratio (%) | 40 | 40 | 90 |

As shown in Figure 3, in the Comparative Example 6, only the platinum catalyst was loaded so that $SO_3$ conversion ratio was excellent, and sulfate was discharged. Although, in the Examples 10 and 11, the palladium catalyst was loaded so that each $SO_3$ conversion ratio was not excellent, and good result was obtained.
Each catalyst was installed into an exhaust system of a swirl chamber type DE having air volume displacement of 2400cc, and was maintained in an idling condition (the temperature of the exhaust gas being 120°C) for 6 hours. After that, a rotating speed is increased and the temperature of the exhaust gas is increased to measure the amount of white smoke which is exhausted from the exhaust pipe. The result was shown in Figure 4. This experiment was performed in the condition that the temperature of the exhaust gas was variously changed. The amount of white smoke was measured by a translucent white smoke meter.
As seen from Figure 4, in the Comparative Example 6, since the platinum catalyst was loaded on a whole surface, HC and SOF were completely burned to generate no white smoke. In the Example 11, too much amount of white smoke was emitted when the temperature of the exhaust gas was around 300°C. On the contrary, in the Example 10, the amount of white smoke was remarkably decreased as compared with the Example 11. This is because the platinum catalyst was loaded on the downstream edge portion.
In the Second Preferred Embodiment, α-alumina was used as the catalyst loaded layer of the palladium catalyst. When a mixed layer of silica and alumina was used as the catalyst loaded layer, sulfate was not discharged. When α-alumina was used as the catalyst loaded layer and the palladium catalyst was added to the catalyst metal, sulfate was not discharged.

Third Preferred Embodiment

An available silica powder having the specific surface of $350m^2$/g, aluminum nitrate aqueous solution, alumina sol and distilled water were mixed to prepare a slurry A.
An available and activated alumina powder having the specific surface of $180m^2$/g and the particle diameter of 1 to 50 m, alumina hydrate, aluminum nitrate aqueous solution and distilled water were mixed to prepare a slurry B.
An available silica powder having the specific surface of $350m^2$/g, silica sol and distilled water were mixed to prepare a slurry C.

Example 12

An available honeycomb support being $\phi$ 30 x 50 and 400cell/in$^2$ was subjected to water absorption treatment and was immersed into the slurry A. After an extra slurry was blown off by an air, the immersed support was dried and calcined to obtain a mixed catalyst loaded layer comprising silica and alumina. The coated amount was about 100g against 1 liter of the volume of the support. The weight ratio of silica to alumina was 9:1, and the particle diameter of alumina was not more than 5μm.

The coated support was immersed into ammine salt aqueous solution of palladium and rhodium, and adsorbed and loaded for a predetermined time to be dried at the temperature of 250°C. The loaded amount of palladium was 1.5g against 1 liter of the volume of the support. The loaded amount of rhodium was 0.3g against 1 liter of the volume of the support.

The predetermined amount of platinum dinitro diammine was added to the slurry B to prepare the slurry D. Only the upstream side edge portion of the coated support was immersed into the slurry D. After an extra slurry was blown off by an air, the immersed support was dried and calcined to obtain a catalyst loaded layer comprising alumina on which platinum was loaded.

Concerning the obtained catalyst according to the Example 12, an upstream portion comprising Pt/Al$_2$O$_3$ was formed on the surface of the upstream side edge portion, and a downstream portion comprising Pd-Rh/SiO$_2$ • Al$_2$O$_3$ was formed on the surface of the downstream side edge portion. The ratio of the volume of the upstream portion to the volume of the downstream portion was 1:10. The loaded amount of platinum on the upstream portion was 1.5g against 1 liter of the volume of the support.

The above result was shown in Table 4.

Example 13

An Example 13 employed the same compositions and the same manner as described in the Example 12 except that the ratio of the volume of the upstream portion to the volume of the downstream portion was 3:10. The result was shown in Table 4.

Example 14

An Example 14 employed the same compositions and the same manner as described in the Example 12 except that the ratio of the volume of the upstream portion to the volume of the downstream portion was 5:10. The result was shown in Table 4.

Example 15

An Example 15 employed the same compositions and the same manner as described in the Example 12 except that the ratio of the volume of the upstream portion to the volume of the downstream portion was 0.5:10. The result was shown in Table 4.

Example 16

An Example 16 employed the same compositions and the same manner as described in the Example 12 except that the ratio of the volume of the upstream portion to the volume of the downstream portion was 1:1. The result was shown in Table 4.

Example 17

An Example 17 employed the same compositions and the same manner as described in the Example 12 except that the slurry A contained more amount of alumina sol. Concerning the obtained catalyst, the weight ratio of silica to alumina contained in the downstream portion was 7:3, and the ratio of the volume of the upstream portion to the volume of the downstream portion was 3:10. The result was shown in Table 4.

Example 18

An Example 18 employed the same compositions and the same manner as described in the Example 17 except that the weight ratio of silica to alumina was 1:1. The result was shown in Table 4.

Example 19

An Example 19 employed the same compositions and the same manner as described in the Example 17 except that the weight ratio of silica to alumina was 3:7. The result was shown in Table 4.

Example 20

An Example 20 employed the same compositions and the same manner as described in the Example 17 except that the ratio of the volume of the upstream portion to the volume of the downstream portion was 9.5:0.5. The result was shown in Table 4.

Example 21

An Example 21 employed the same compositions and the same manner as described in the Example 12 except that the slurry A contained alumina hydrate instead of alumina sol. Concerning the obtained catalyst, the weight ratio of silica to alumina was 7:3, and the ratio of the volume of the upstream portion to the volume of the downstream portion was 3:10. The particle diameter of alumina contained in the downstream portion was 1 to 10μm. The result was shown in Table 4.

Example 22

An Example 22 employed the same compositions and the same manner as described in the Example 12 except that the slurry A contained active alumina powder having the particle diameter of 10 to 50μm. The weight ratio of silica to alumina was 7:3, and the ratio of the volume of the upstream portion to the volume of the downstream portion was 3:10. The result was shown in Table 4.

Comparative Example 7

A Comparative Example 7 employed the same compositions and the same manner as described in the Example 12 except that the slurry B was used to obtain the catalyst loaded layer comprising alumina on which palladium and rhodium were loaded. The loaded amount of palladium was 1.5g/liter, and the loaded amount of rhodium was 0.3g/liter. The result was shown in Table 4.

Comparative Example 8

A Comparative Example 8 employed the same compositions and the same manner as described in the Comparative Example 7 except that 1.5g/liter of platinum was loaded on the catalyst loaded layer. The result was shown in Table 4.

Comparative Example 9

A Comparative Example 9 employed the same compositions and the same manner as described in the Example 17 except that the slurry B was used instead of the slurry A, namely, the catalyst loaded layer on the downstream portion comprises alumina. The result was shown in Table 4.

Example 23

An Example 23 employed the same compositions and the same manner as described in the Example 17 except that the slurry C was used instead of the slurry A, namely, the catalyst loaded layer at the downstream portion comprises silica. The result was shown in Table 4.

TABLE 4

| | | Volume Upstream Portion/Down-stream Portion | Downstream Portion $SiO_2/Al_2O_3$ | Downstream Portion Particle Diameter of $Al_2O_3$ (μm) | Composition of Upstream Portion | Composition of Downstream Portion |
|---|---|---|---|---|---|---|
| Examples | 12 | 1/10 | 9/1 | 0.5~5 | $Pt/Al_2O_3$ | Pd-Rh/$SiO_2 \cdot Al_2O_3$ |
| | 13 | 3/10 | 9/1 | 0.5~5 | $Pt/Al_2O_3$ | Pd-Rh/$SiO_2 \cdot Al_2O_3$ |
| | 14 | 5/10 | 9/1 | 0.5~5 | $Pt/Al_2O_3$ | Pd-Rh/$SiO_2 \cdot Al_2O_3$ |
| | 15 | 0.5/10 | 9/1 | 0.5~5 | $Pt/Al_2O_3$ | Pd-Rh/$SiO_2 \cdot Al_2O_3$ |
| | 16 | 10/10 | 9/1 | 0.5~5 | $Pt/Al_2O_3$ | Pd-Rh/$SiO_2 \cdot Al_2O_3$ |
| | 17 | 3/10 | 7/3 | 0.5~5 | $Pt/Al_2O_3$ | Pd-Rh/$SiO_2 \cdot Al_2O_3$ |
| | 18 | 3/10 | 5/5 | 0.5~5 | $Pt/Al_2O_3$ | Pd-Rh/$SiO_2 \cdot Al_2O_3$ |
| | 19 | 3/10 | 3/7 | 0.5~5 | $Pt/Al_2O_3$ | Pd-Rh/$SiO_2 \cdot Al_2O_3$ |
| | 20 | 3/10 | 9.5/0.5 | 0.5~5 | $Pt/Al_2O_3$ | Pd-Rh/$SiO_2 \cdot Al_2O_3$ |
| | 21 | 3/10 | 7/3 | 1~10 | $Pt/Al_2O_3$ | Pd-Rh/$SiO_2 \cdot Al_2O_3$ |
| | 22 | 3/10 | 7/3 | 10~50 | $Pt/Al_2O_3$ | Pd-Rh/$SiO_2 \cdot Al_2O_3$ |
| Comparative Examples | 7 | 0/10 | 0/10 | 1~50 | Pd-Rh/$Al_2O_3$ | |
| | 8 | 10/0 | 0/10 | 1~50 | $Pt/Al_2O_3$ | |
| | 9 | 3/10 | 0/10 | 1~50 | $Pt/Al_2O_3$ | Pd-Rh/$Al_2O_3$ |
| Example | 23 | 3/10 | 10/0 | - | $Pt/SiO_2$ | Pd-Rh/$SiO_2$ |

The catalysts in the Examples 13, 17 to 23 and the Comparative Example 9 were attached to a multi converter in which 12 catalysts can be stored. The multi converter was installed into an exhaust system of a swirl chamber type DE having air volume displacement of 2400cc. Then, these catalysts were operated for 10 hours under the condition that the rotating speed was 2100rpm and that the inlet gas temperature was 200°C. After that, the SOF amount of each catalyst was measured by measuring the weight amount of each catalyst. In this test, since the inlet gas temperature was 200°C, no amount of sulfate was generated, and an increased amount of weight was considered as the SOF adsorption amount.

Concerning the above catalysts, an endurance test was performed for 100 hours under the condition that the rotating speed was 2000rpm and that the inlet gas temperature was 400°C. After that, the temperature for purifying 50% of $C_2H_4$ in $C_2H_4$-CO-$O_2$-$H_2O$ system model gas was measured. In this condition, sulfate was adsorbed and stored into the catalyst loaded layer, and it caused the deterioration of HC purification effect. The result was shown in Table 5.

TABLE 5

| | SiO$_2$/Al$_2$O$_3$ | Particle Diameter of Al$_2$O$_3$ ( m) | Adsorbed Amount of SOF (g/ ) | Temperature for Purifying 50% of C$_2$H$_4$ (°C) |
|---|---|---|---|---|
| Exam. 12 | 9/1 | 0.5-5 | 0.34 | 252 |
| Exam. 17 | 7/3 | 0.5-5 | 0.35 | 250 |
| Exam. 18 | 5/5 | 0.5-5 | 0.39 | 258 |
| Exam. 19 | 3/7 | 0.5-5 | 0.40 | 278 |
| Exam. 20 | 9.5/0.5 | 0.5-5 | 0.21 | 310 |
| Exam. 21 | 7/3 | 1-10 | 0.32 | 252 |
| Exam. 22 | 7/3 | 10-50 | 0.26 | 266 |
| Com. Exam. 9 | 0/10 | 1-50 | 0.40 | 286 |
| Exam. 23 | 10/0 | - | 0.20 | 310 |

As shown in Table 5, when the ratio of alumina in the downstream portion was increased, the adsorption of SOF was improved. When 10% of alumina was mixed, the adsorption of SOF was remarkably improved.

When the ratio of alumina was high, the activity for purifying HC was excellent. However, when the ratio of alumina was increased, the adsorption amount of sulfate was increased, and the purification performance of HC was deteriorated due to the poisoning of sulfate.

Concerning the catalysts in the Third Preferred Embodiment, the downstream portion on which palladium was loaded was used as the mixed catalyst loaded layer comprising silica and alumina so that the adsorption performance of SOF and anti-poisoning deterioration of sulfate can be obtained.

From the comparison among Examples 17, 21 and 22, as the particle diameter of alumina became large, the adsorption performance of SOF and the purification activity of HC became deteriorated. Therefore, it is preferable that the particle diameter of alumina is not more than 10μm. Namely, since the particle diameter of alumina was smaller, the catalyst metal can be highly dispersed, and the adsorption site of SOF was increased.

Concerning the catalysts in the Examples 12 to 16 and the Comparative Examples 7 to 8, the conversion ratio of sulfate in N$_2$-O$_2$-SO$_2$-H$_2$O system model gas at the inlet gas temperature of 430°C was measured in the same manner as that of the Second Preferred Embodiment. The temperature for purifying 50% of C$_2$H$_4$ in C$_2$H$_4$-CO-O$_2$-H$_2$O system model gas was also measured. The result was shown in Table 6.

TABLE 6

| | Volume Upstream portion/Downstream Portion | Conversion Ratio of Sulfate (%) | Temperature for Purifying 50% of C$_2$H$_4$ (°C) |
|---|---|---|---|
| Exam. 12 | 1/10 | 21 | 238 |
| Exam. 13 | 3/10 | 23 | 235 |
| Exam. 14 | 5/10 | 26 | 235 |
| Exam. 15 | 0.5/10 | 21 | 265 |
| Exam. 16 | 10/10 | 68 | 235 |
| Com. Exam. 7 | 0/10 | 20 | 270 |
| Com. Exam. 8 | 10/0 | 92 | 233 |

As seen from the result of the Comparative Examples 7 and 8, the oxidation activity in the upstream portion was excellent, but the conversion ratio of sulfate was high. In the downstream portion, the conversion ratio of sulfate was low, but the oxidation activity was not excellent.

However, the downstream portion was formed at the downstream side of the upstream portion so that the above both performance can be obtained. Concerning the catalyst in the Example 15, the oxidation activity was poor as compared with that of the catalysts in the Examples 12 to 14. Concerning the catalyst in the Example 16, the conversion ratio of sulfate was high so that the ratio of the volume of the upstream portion to the volume of the downstream portion was in the range of 1:10 to 5:10. When the volume of the upstream portion on which platinum was loaded was set in the above range, the oxidation activity for HC can be improved to the same level as that of the conventional catalyst on which only platinum catalyst was loaded while controlling the amount for generating sulfate.

Namely, the generation reaction of sulfate had more influence on space velocity (SV) than the oxidation reaction of HC. Since the volume of the upstream portion was limited and SV was increased, the generation amount of sulfate was controlled.

Concerning the catalyst for purifying exhaust gases in DE according to the present invention, the purification performance of SOF is excellent, and particulate and sulfate was prevented from being discharged. Concerning the catalyst in the Second Preferred Embodiment, white smoke which causes HC and SOF was prevented from being discharged in addition to the above characteristics.

Since the absolute value of the loaded amount of platinum catalyst is decreased as compared with the conventional catalyst, the generation amount of $NO_2$ which is likely to be generated at high temperature is decreased. Therefore, the odor of idling oxidation at the time of high-speed running can be prevented.

Concerning the catalyst according to the Third Preferred Embodiment, both the adsorption performance of SOF and the anti-poisoning deterioration of sulfate can be obtained. Therefore, the excellent catalytic performance can be exhibited.

Having now fully described the present invention, it will be apparent to one of ordinary skill in the art that many changes and modifications can be made thereto without departing from the spirit or scope of the present invention as set forth herein including the appended claims.

In an exhaust gas purifying catalyst in diesel engines, platinum catalyst is loaded on the upstream side of an exhaust gas flow, and palladium catalyst is loaded on the lower stream side of the exhaust gas flow. HC and SOF in the exhaust gas can be burned and removed by the platinum catalyst at low temperature. $SO_2$ is not oxidized at low temperature. The exhaust gas is heated to high temperature at the upstream portion. HC and SOF is effectively oxidized and removed by palladium catalyst at high temperature. $SO_2$ is not oxidized even at higher temperature. Therefore, in the exhaust gas purifying catalyst of the present invention, HC and SOF can be removed at low temperature and $SO_2$ is not oxidized.

**Claims**

1. An exhaust gas purifying catalyst in diesel engines comprising:

    a support base,
    a catalyst loaded layer formed on the surface of said support base, and
    a catalyst metal loaded on said catalyst loaded layer;
    said catalyst metal comprising a platinum catalyst loaded on the upstream side of the exhaust gas flow and a palladium catalyst loaded on the lower stream side of said exhaust gas flow, wherein
    said catalyst loaded layer comprises a first catalyst loaded layer portion on the upstream side of the exhaust gas flow, on which said platinum catalyst is loaded, being formed of one material selected from the group consisting of alumina, alumina and lanthanum, alumina and ceria, titania, and silica; and a second catalyst loaded layer portion on the lower side of said exhaust gas flow, on which said palladium catalyst is loaded, being formed of one material selected from the group consisting of titania, silica and titania, silica and alumina, alumina and ceria, and silica.

2. An exhaust gas purifying catalyst in diesel engines according to claim 1, wherein the ratio of the volume of the portion on which said platinum catalyst is loaded to the volume of the portion on which said palladium catalyst is loaded is in the range of 1:10 to 1:2.

3. An exhaust gas purifying catalyst in diesel engines according to claim 1, wherein said first catalyst loaded layer portion is formed of alumina, and said second catalyst loaded layer portion is a mixed catalyst loaded layer portion formed of silica and alumina.

4. An exhaust gas purifying catalyst in diesel engines according to claim 3, wherein the weight ratio of said silica to said alumina in said mixed catalyst loaded layer portion is in the range of 9:1 to 1:1.

5. An exhaust gas purifying catalyst in diesel engines according to claim 1, wherein platinum catalyst is further loaded on the lowest stream side of said exhaust gas flow.

6. An exhaust gas purifying catalyst in diesel engines according to claim 5, wherein said first catalyst loaded layer portion is formed of alumina, said second catalyst loaded layer portion is a mixed catalyst loaded layer portion formed of silica and alumina, and a catalyst loaded layer portion formed of alumina is provided on the surface of said support base at the lowest stream side of said exhaust gas flow; said platinum catalyst being loaded on both said catalyst loaded layer portions formed of alumina, and said palladium catalyst being loaded on said mixed catalyst loaded layer portion formed of silica and alumina.

7. An exhaust gas purifying catalyst in diesel engines according to claim 6, wherein the particle diameter of said alumina in said catalyst loaded layer comprising alumina is in the range of 0.1 to 10μm.

8. An exhaust gas purifying catalyst in diesel engines according to claim 7, wherein the particle diameter of said alumina is in the range of 0.5 to 5μm.

9. An exhaust gas purifying catalyst in diesel engines according to claim 1, wherein said catalyst metals comprise said platinum catalyst, said palladium catalyst, and catalyst metals other than said platinum catalyst and said palladium catalyst.

10. An exhaust gas purifying catalyst in diesel engines according to claim 9, wherein said catalyst metal other than said platinum catalyst and said palladium catalyst is rhodium catalyst.

11. An exhaust gas purifying catalyst in diesel engines according to claim 10, wherein said rhodium catalyst is mixed with said palladium catalyst.

12. An exhaust gas purifying catalyst in diesel engines according to claim 1, wherein said support base is selected from the group consisting of ceramic monolith support, ceramic foam support and metal honeycomb support.

13. An exhaust gas purifying catalyst in diesel engines according to claim 1, wherein said support base comprises an upstream side support base arranged at the upstream side of said exhaust gas flow and a downstream side support base arranged at the downstream side of said exhaust gas flow, wherein said first catalyst loaded layer portion is formed on the surface of said upstream side support base and said second catalyst loaded layer portion is formed on the surface of said downstream side support base.

14. An exhaust gas purifying catalyst in diesel engines according to claim 13, wherein said first catalyst loaded layer portion is formed of one material selected from the group consisting of alumina, alumina and lanthanum, alumina and ceria, titania, or silica; and said second catalyst loaded layer portion is formed of one material selected from the group consisting of titania, silica and titania, silica and alumina, alumina and ceria, and silica.

15. An exhaust gas purifying catalyst in diesel engines according to claim 13, wherein said first catalyst loaded layer portion comprises a first layer formed of titania and a second layer formed on said first layer, said second layer being formed of one material selected from the group consisting of alumina, alumina and lanthanum, alumina and ceria, titania, silica; and palladium catalyst and rhodium catalyst are loaded on said first layer, and said platinum catalyst is loaded on said second layer.

16. An exhaust gas purifying catalyst in diesel engines according to claim 13, wherein the ratio of the volume of said upstream side support base to the volume of said downstream side support base is in the range of 1:10 to 1:2.

**Patentansprüche**

1. Abgasreinigungskatalysator für Dieselmotore mit

einem Träger,

einer katalysatortragenden Schicht, die an der Oberfläche des erwähnten Trägers gebildet ist, und

einem Katalysatormetall, das auf der erwähnten katalysatortragenden Schicht aufgebracht ist;

wobei das erwähnte Katalysatormetall einen Platinkatalysator, der an der stromaufwärts gelegenen Seite des Abgasstroms aufgebracht ist, und einen Palladiumkatalysator, der an der weiter stromabwärts gelegenen Seite des erwähnten Abgasstroms aufgebracht ist, umfasst, wobei

die erwähnte katalysatortragende Schicht einen ersten katalysatortragenden Schichtbereich an der stromaufwärts gelegenen Seite des Abgasstroms, auf dem der erwähnte Platinkatalysator aufgebracht ist und der aus einem Material gebildet ist, das aus der Gruppe ausgewählt ist, die aus Aluminiumoxid, Aluminiumoxid und Lanthan, Aluminiumoxid und Cerdioxid, Titandioxid und Siliciumdioxid besteht; und einen zweiten katalysatortragenden Schichtbereich an der weiter stromabwärts gelegenen Seite des erwähnten Abgasstroms, auf dem der erwähnte Palladiumkatalysator aufgebracht ist und der aus *einem* Material gebildet ist, das aus der Gruppe ausgewählt ist, die aus Titandioxid, Siliciumdioxid und Titandioxid, Siliciumdioxid und Aluminiumoxid, Aluminiumoxid und Cerdioxid und Siliciumdioxid besteht, umfasst.

2. Abgasreinigungskatalysator für Dieselmotore nach Anspruch 1, bei dem das Verhältnis des Volumens des Bereichs, auf dem der erwähnte Platinkatalysator aufgebracht ist, zu dem Volumen des Bereichs, auf dem der erwähnte Palladiumkatalysator aufgebracht ist, im Bereich von 1:10 bis 1:2 liegt.

3. Abgasreinigungskatalysator für Dieselmotore nach Anspruch 1, bei dem der erwähnte erste katalysatortragende Schichtbereich aus Aluminiumoxid gebildet ist und der erwähnte zweite katalysatortragende Schichtbereich ein gemischter katalysatortragender Schichtbereich ist, der aus Siliciumdioxid und Aluminiumoxid gebildet ist.

4. Abgasreinigungskatalysator für Dieselmotore nach Anspruch 3, bei dem das Masseverhältnis des erwähnten Siliciumdioxids zu dem erwähnten Aluminiumoxid in dem erwähnten gemischten katalysatortragenden Schichtbereich im Bereich von 9:1 bis 1:1 liegt.

5. Abgasreinigungskatalysator für Dieselmotore nach Anspruch 1, bei dem ein Platinkatalysator ferner an der am weitesten stromabwärts gelegenen Seite des erwähnten Abgasstroms aufgebracht ist.

6. Abgasreinigungskatalysator für Dieselmotore nach Anspruch 5, bei dem der erwähnte erste katalysatortragende Schichtbereich aus Aluminiumoxid gebildet ist, der erwähnte zweite katalysatortragende Schichtbereich ein gemischter katalysatortragender Schichtbereich ist, der aus Siliciumdioxid und Aluminiumoxid gebildet ist, und an der Oberfläche des erwähnten Trägers an der am weitesten stromabwärts gelegenen Seite des erwähnten Abgasstroms ein katalysatortragender Schichtbereich bereitgestellt ist, der aus Aluminiumoxid gebildet ist; wobei der erwähnte Platinkatalysator auf den beiden erwähnten aus Aluminiumoxid gebildeten katalysatortragenden Schichtbereichen aufgebracht ist und der erwähnte Palladiumkatalysator auf dem erwähnten aus Siliciumdioxid und Aluminiumoxid gebildeten gemischten katalysatortragenden Schichtbereich aufgebracht ist.

7. Abgasreinigungskatalysator für Dieselmotore nach Anspruch 6, bei dem der Teilchendurchmesser des erwähnten Aluminiumoxids in der erwähnten katalysatortragenden Schicht, die Aluminiumoxid umfasst, im Bereich von 0,1 bis 10 μm liegt.

8. Abgasreinigungskatalysator für Dieselmotore nach Anspruch 7, bei dem der Teilchendurchmesser des erwähnten Aluminiumoxids im Bereich von 0,5 bis 5 μm liegt.

9. Abgasreinigungskatalysator für Dieselmotore nach Anspruch 1, bei dem die erwähnten Katalysatormetalle den erwähnten Platinkatalysator, den erwähnten Palladiumkatalysator und Katalysatormetalle, die von dem erwähnten Platinkatalysator und dem erwähnten Palladiumkatalysator verschieden sind, umfassen.

10. Abgasreinigungskatalysator für Dieselmotore nach Anspruch 9, bei dem das erwähnte Katalysatormetall, das von dem erwähnten Platinkatalysator und dem erwähnten Palladiumkatalysator verschieden ist, ein Rhodiumkatalysator ist.

11. Abgasreinigungskatalysator für Dieselmotore nach Anspruch 10, bei dem der erwähnte Rhodiumkatalysator mit dem erwähnten Palladiumkatalysator vermischt ist.

12. Abgasreinigungskatalysator für Dieselmotore nach Anspruch 1, bei dem der erwähnte Träger aus der Gruppe ausgewählt ist, die aus einem keramischen monolithischen Träger, einem keramischen Träger mit Schaumstruktur und einem metallischen Träger mit Wabenstruktur besteht.

13. Abgasreinigungskatalysator für Dieselmotore nach Anspruch 1, bei dem der erwähnte Träger einen stromaufwärts gelegenen Träger, der an der stromaufwärts gelegenen Seite des erwähnten Abgasstroms angeordnet ist, und einen stromabwärts gelegenen Träger, der an der stromabwärts gelegenen Seite des erwähnten Abgasstroms angeordnet ist, umfasst, wobei der erwähnte erste katalysatortragende Schichtbereich an der Oberfläche des erwähnten stromaufwärts gelegenen Trägers gebildet ist und der erwähnte zweite katalysatortragende Schichtbereich an der Oberfläche des erwähnten stromabwärts gelegenen Trägers gebildet ist.

14. Abgasreinigungskatalysator für Dieselmotore nach Anspruch 13, bei dem der erwähnte erste katalysatortragende Schichtbereich aus *einem* Material gebildet ist, das aus der Gruppe ausgewählt ist, die aus Aluminiumoxid, Aluminiumoxid und Lanthan, Aluminiumoxid und Cerdioxid, Titandioxid oder Siliciumdioxid besteht; und der erwähnte zweite katalysatortragende Schichtbereich aus *einem* Material gebildet ist, das aus der Gruppe ausgewählt ist, die aus Titandioxid, Siliciumdioxid und Titandioxid, Siliciumdioxid und Aluminiumoxid, Aluminiumoxid und Cerdioxid und Siliciumdioxid besteht.

15. Abgasreinigungskatalysator für Dieselmotore nach Anspruch 13, bei dem der erwähnte erste katalysatortragende Schichtbereich eine erste Schicht, die aus Titandioxid gebildet ist, und eine zweite Schicht, die auf der erwähnten ersten Schicht gebildet ist, umfasst, wobei die erwähnte zweite Schicht aus *einem* Material gebildet ist, das aus der Gruppe ausgewählt ist, die aus Aluminiumoxid, Aluminiumoxid und Lanthan, Aluminiumoxid und Cerdioxid, Titandioxid und Siliciumdioxid besteht; und auf der erwähnten ersten Schicht ein Palladiumkatalysator und ein Rhodiumkatalysator aufgebracht sind und auf der erwähnten zweiten Schicht der erwähnte Platinkatalysator aufgebracht ist.

16. Abgasreinigungskatalysator für Dieselmotore nach Anspruch 13, bei dem das Verhältnis des Volumens des erwähnten stromaufwärts gelegenen Trägers zu dem Volumen des erwähnten stromabwärts gelegenen Trägers im Bereich von 1:10 bis 1:2 liegt.

**Revendications**

1. Catalyseur d'épuration des gaz d'échappement des moteurs diesel, comprenant :

   une base formant support.
   une couche chargée de catalyseur, formée sur la surface de ladite base formant support, et
   un catalyseur métallique chargé sur ladite couche chargée de catalyseur ;
   ledit catalyseur métallique comprenant un catalyseur au platine chargé en amont du flux des gaz d'échappement et un catalyseur au palladium chargé en aval dudit flux des gaz d'échappement, dans lequel
   ladite couche chargée de catalyseur comprenant une première partie de couche chargée de catalyseur en amont du flux de gaz d'échappement, sur laquelle ledit catalyseur au platine est chargé et qui est constituée d'un matériau choisi dans le groupe constitué par l'alumine, l'alumine et le lanthane, l'alumine et l'oxyde cérique, le dioxyde de titane, et la silice ; et une seconde partie de couche chargée de catalyseur en aval dudit flux des gaz d'échappement, sur laquelle ledit catalyseur au palladium est chargé et qui est constituée d'un matériau choisi dans le groupe constitué par le dioxyde de titane, la silice et le dioxyde de titane, la silice et l'alumine, l'alumine et l'oxyde cérique, et la silice.

2. Un catalyseur d'épuration des gaz d'échappement des moteurs diesel selon la revendication 1, dans lequel le rapport du volume de la partie sur laquelle ledit catalyseur au platine est chargé sur le volume de la partie sur laquelle ledit catalyseur au palladium est chargé est compris entre 1 :10 et 1 :2.

3. Un catalyseur d'épuration des gaz d'échappement des moteurs diesel selon la revendication 1, dans lequel ladite première partie de couche chargée de catalyseur est constituée d'alumine, et ladite seconde partie de couche chargée de catalyseur est une partie de couche chargée de catalyseur mixte constitué de silice et d'alumine.

4. Un catalyseur d'épuration des gaz d'échappement des moteurs diesel selon la revendication 3, dans lequel le rapport massique de ladite silice sur ladite alumine dans ladite partie de couche chargée de catalyseur mixte est compris entre 9 :1 et 1 :1.

5. Un catalyseur d'épuration des gaz d'échappement des moteurs diesel selon la revendication 1, dans lequel du catalyseur au platine est en outre chargé à l'extrémité la plus en aval dudit flux des gaz d'échappement.

6. Un catalyseur d'épuration des gaz d'échappement des moteurs diesel selon la revendication 5, dans lequel ladite première partie de couche chargée de catalyseur est constituée d'alumine, ladite seconde partie de couche chargée de catalyseur est une partie de couche chargée de catalyseur mixte constitué de silice et d'alumine, et une partie de couche chargée de catalyseur constitué d'alumine est disposée sur la surface de ladite base formant support à l'extrémité la plus en aval dudit flux des gaz d'échappement ; ledit catalyseur au platine étant chargé à la fois sur les parties de couche chargée de catalyseur constitué d'alumine, et ledit catalyseur au palladium étant chargé sur ladite partie de couche chargée de catalyseur mixte constitué de silice et d'alumine.

**7.** Un catalyseur d'épuration des gaz d'échappement des moteurs diesel selon la revendication 6, dans lequel le diamètre des particules de ladite alumine dans ladite couche chargée de catalyseur comprenant de l'alumine est compris entre 0,1 et 10μm.

**8.** Un catalyseur d'épuration des gaz d'échappement des moteurs diesel selon la revendication 7, dans lequel le diamètre des particules de ladite alumine est compris entre 0,5 et 5μm.

**9.** Un catalyseur d'épuration des gaz d'échappement des moteurs diesel selon la revendication 1, dans lequel lesdits catalyseurs métalliques comprennent ledit catalyseur au platine, ledit catalyseur au palladium, et des catalyseurs métalliques autre que ledit catalyseur au platine et ledit catalyseur au palladium.

**10.** Un catalyseur d'épuration des gaz d'échappement des moteurs diesel selon la revendication 9, dans lequel ledit catalyseur métallique autre que ledit catalyseur au platine et ledit catalyseur au palladium est un catalyseur au rhodium.

**11.** Un catalyseur d'épuration des gaz d'échappement des moteurs diesel selon la revendication 10, dans lequel ledit catalyseur au rhodium est mélangé avec ledit catalyseur au palladium.

**12.** Un catalyseur d'épuration des gaz d'échappement des moteurs diesel selon la revendication 1, dans lequel ladite base formant support est choisie dans le groupe constitué par un support monolithique céramique, un support en mousse céramique et un support alvéolaire métallique.

**13.** Un catalyseur d'épuration des gaz d'échappement des moteurs diesel selon la revendication 1, dans lequel ladite base formant support comprend une base formant support en amont, disposée en amont du flux de gaz d'échappement et une base formant support en aval, disposée en aval dudit flux de gaz d'échappement, dans lequel ladite première partie de couche chargée de catalyseur est formée sur la surface de ladite base formant support en amont et ladite seconde partie de couche chargée de catalyseur est formée sur la surface de ladite base formant support en aval.

**14.** Un catalyseur d'épuration des gaz d'échappement des moteurs diesel selon la revendication 13, dans lequel ladite première partie de couche chargée de catalyseur est constituée d'un matériau choisi dans le groupe constitué par l'alumine, l'alumine et le lanthane, l'alumine et l'oxyde cérique, le dioxyde de titane, ou la silice ; et ladite seconde partie de couche chargée de catalyseur est constituée d'un matériau choisi dans le groupe constitué par le dioxyde de titane, la silice et le dioxyde de titane, la silice et l'alumine, l'alumine et l'oxyde cérique, et la silice.

**15.** Un catalyseur d'épuration des gaz d'échappement des moteurs diesel selon la revendication 13, dans lequel ladite première partie de couche chargée de catalyseur comprend une première couche formée de dioxyde de titane et une seconde couche formée sur ladite première couche, ladite seconde couche étant constituée d'un matériau choisi dans le groupe constitué par l'alumine, l'alumine et le lanthane, l'alumine et l'oxyde cérique, le dioxyde de titane, la silice ; et le catalyseur au palladium et le catalyseur au rhodium sont chargés sur ladite première couche, et ledit catalyseur au platine est chargé sur ladite seconde couche.

**16.** Un catalyseur d'épuration des gaz d'échappement des moteurs diesel selon la revendication 13, dans lequel le rapport du volume de la base formant support en amont sur le volume de ladite base formant support en aval est compris entre 1 :10 et 1 :2.

# FIG. 1

100 CASE

1 FIRST CATALYST

2 SECOND CATALYST

EXHAUST GAS FLOW

# FIG. 2

1

12

14

11

10

13

15 Pt

2

22 Pd

21

20

23 Rh

11

14

EXHAUST GAS FLOW

14

11

10

21

20

# FIG. 3

35  32 PALLADIUM CATALYST

31  31 PLATINUM CATALYST

EXHAUST GAS FLOW ⇒

3 SUPPORT BASE

30 CATALYST LOADED LAYER

33  34  3

10 mm ← 98 mm → 10 mm

# FIG. 4

EX. 11

EX. 10

COMP. EX. 6

AMOUNT OF WHITE SMOKE (LEVEL)

CATALYST INLET GAS TEMPERATURE (°C)